# EUROPÄISCHE PATENTSCHRIFT

(11) **EP 2 580 437 B1**
(45) Veröffentlichungstag und Bekanntmachung des Hinweises auf die Patenterteilung: **24.10.2018**
(21) Anmeldenummer: 11721762.0
(22) Anmeldetag: 19.05.2011
(51) Int. Cl.: F01N 3/20

(54) **VORRICHTUNG ZUR BELÜFTUNG EINES ABGASNACHBEHANDLUNGSSYSTEMS**
DEVICE FOR VENTILATING AN EXHAUST GAS AFTER-TREATMENT SYSTEM
DISPOSITIF D'AÉRATION D'UN SYSTÈME DE RECYCLAGE DE GAZ D'ÉCHAPPEMENT

(30) Priorität: 14.06.2010 DE 102010030050
(43) Veröffentlichungstag der Anmeldung: 17.04.2013
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2011/058093
(87) Internationale Veröffentlichungsnummer: WO 2011/157508

(56) Entgegenhaltungen:
- WO-A1-2010/034401
- DE-A1-102008 000 594
- DE-A1-102008 009 650
- DE-A1-102008 036 265

## Beschreibung

### Stand der Technik

Bei Kraftfahrzeugen mit Verbrennungskraftmaschinen ist aufgrund der in den nächsten Jahren zur erwartenden verschärften Abgasgesetzgebung der Anteil an Stickoxid im Abgas erheblich zu reduzieren. Zur Reduzierung des Stickstoffanteiles im Abgas wird derzeit zum Beispiel das SCR-Verfahren (SCR = Selektive Katalytische Reduktion) eingesetzt, bei dem die Stickoxide unter Einsatz eines Reduktionsmittels zu Stickstoff und Wasser reduziert werden. Als Reduktionsmittel werden in vielen Fällen wässrige Systeme eingesetzt, wie zum Beispiel eine Harnstoff-Wasser-Lösung.

Das eingesetzte Reduktionsmittel, in der Regel in flüssiger Form, wird im Allgemeinen in einem Vorratstank bevorratet und über ein Fördermodul vom Tank zu einem Dosiermodul zum Einbringen des Reduktionsmittels in das Abgas gefördert.

Die derzeit eingesetzten flüssigen Reduktionsmittel gefrieren je nach zugesetztem Antifrostmittel unterhalb einer Temperatur von ca. -11°C. Um die Anforderung an die NOₓ-Reduzierung auch unterhalb dieser Temperaturen erfüllen zu können, ist zu gewährleisten, dass auch bei Temperaturen unterhalb von -11°C Reduktionsmittel in ausreichender Menge flüssig zur Verfügung steht. Daher werden üblicherweise spezielle Heizmaßnahmen eingesetzt, um das Reduktionsmittel im System im flüssigen Zustand zu halten bzw. in diesen zu überführen. Neben dem Vorratstank werden häufig auch das Fördermodul und/oder die verwendeten Leitungen ganz oder teilweise beheizbar gestaltet.

Aus DE 10 2006 027 487 A1 ist ein Fahrzeugtank für ein flüssiges Reduktionsmittel bekannt, insbesondere für eine Harnstofflösung. Der Fahrzeugtank ist aus Kunststoffmaterial hergestellt. Eine Funktionseinheit, welche neben anderen Elementen eine elektrische Heizvorrichtung und eine Saugleitung umfasst, ist in einer Öffnung im Tank eingesetzt und dichtet diese Öffnung deckelartig ab. Die notwendigen Öffnungen, beispielsweise die Öffnung zur Aufnahme der Funktionseinheit für Zu- und Rücklauf, eine Befüllöffnung sowie Zu- und Entlüftung des Vorratstankes werden an der Tankoberseite vorgesehen, d.h. nicht in dem vom flüssigen Reduktionsmittel gefluteten Bereich im unteren Bereich des Vorratstanks. Es ist des Weiteren bekannt, die an einem Tank vorgesehenen Öffnungen, beispielsweise eine Be- und Entlüftungsöffnung, die Öffnung zum Entleeren des Tanks und eine Öffnung zum Einsetzen eines Moduls, umfassend Heizungselement, Füllstandssensor und/oder Temperatursensor, aus Gründen einer vereinfachten Montage an die Bodenseite des Tanks zu verlegen. So sind die Länge einer Absaugleitung und die Länge der elektrischen Leitungen zu einer Heizung, sowie die Heizung selbst unabhängig von der Tankform, an der sie eingesetzt werden.

Allerdings tritt dabei der Nachteil auf, dass alle an einem Tank vorgesehenen Öffnungen, welche in geeigneter Weise durch einen Deckel verschlossen werden, unterhalb des Flüssigkeitsspiegels des Reduktionsmittels im Vorratstank liegen. Da es sich insbesondere bei einer Harnstoff-Wasserlösung um ein besonders kriechfähiges Medium handelt, treten an den erwähnten Öffnungen verstärkt Undichtigkeiten auf. Da sich einerseits die wässrige Harnstofflösung beim Kontakt mit Luft sofort in Kristalle umwandelt und andererseits zu Korrosion an elastomeren Kunststoffen und metallischen Werkstoffen führt, sind Undichtigkeiten unbedingt zu vermeiden.

Trotz vorgesehener Dichtungen besteht eine häufig auftretende Problematik darin, dass an den Schnittstellen zwischen den einzelnen Komponenten, insbesondere den Komponenten Vorratstank, Deckel, Fördermodul und Saugleitung, insbesondere aufgrund der zu berücksichtigenden Volumenausdehnung des Reduktionsmittels beim Gefrieren von etwa 10 %, die Dichtigkeit und Festigkeit der Schnittstellen nicht gewährleistet ist.

Das Reduktionsmittel wird in der Regel von einem Förderaggregat in einer Leitung vom Vorratstank zum Dosiermodul gefördert. Das Abgasnachbehandlungssystem wird über die Pumpendrehzahl und einen Drucksensor auf einen konstanten Systemdruck eingeregelt. Die Pumpe arbeitet dabei gegen eine Rückstromdrossel, über die die Flüssigkeit, d.h. das in flüssiger Form liegende Reduktionsmittel, wieder in den Vorratstank zurückgeführt wird. Somit arbeitet der Pumpenmotor permanent mit einem Basismoment, ein nur schwer realisierbarer Momentensprung von Null auf das Betriebsmoment wird umgangen. Da das Reduktionsmittel bei Temperaturen ab ca. -11°C gefriert, ist das System durch Umpolen des Förderaggregates, zum Beispiel über ein 4/2-Wegeventil, abgasrohrseitig zu entlüften. Das Dosiermodul wird geöffnet und die Pumpe saugt das Abgas zurück in das System, wodurch die Flüssigkeit in den Vorratstank zurückfließt. Dieser Vorgang wird im Nachlauf, sobald der Fahrer den Motor des Kraftfahrzeuges abgestellt hat, automatisch durchgeführt. Bei LKW-Anwendungen ergibt sich nun das Problem, dass die Fahrzeughersteller mit dem Ausschalten der Verbrennungskraftmaschine auch das gesamte Abgassystem von der Batterie trennen, d.h. ein Rücksaugen im bisherigen Modus im Nachlaufbetrieb ist nicht mehr möglich. In diesem mit gefrierfähigem Reduktionsmittel befüllten Zustand ist das Abgasnachbehandlungssystem und insbesondere das Dosierventil nicht mehr gefrierfest.

Die DE 10 2008 000 594 beschreibt eine Vorrichtung zum Entleeren einer Reduktionsmittelvorrichtung mit einem mechanischen Energiespeicher.

### Darstellung der Erfindung

Erfindungsgemäß wird der konstante Systemdruck innerhalb des Abgasnachbehandlungssystems während des Betriebs zu dessen Belüften nach Abschalten der Verbrennungskraftmaschine genutzt. Beim Abstellen der Verbrennungskraftmaschine wird die im durch das Förderaggregat komprimierten Reduktionsmittel enthaltene gespeicherte Energie dazu benutzt, insbesondere das kritische Dosierventil gegen das Abgas zu belüften. Die dazu notwendige Energie wird in einem hydraulischen Federspeicher gespeichert und beim Abstellen der Verbrennungskraftmaschine beim Abbau des Systemdrucks freigesetzt. Zur Betätigung des hydraulischen Federspeichers nach dem Abstellen der Verbrennungskraftmaschine kann der hydraulische Federspeichererfindungsgemäß über ein aktives, d.h. ein elektrisch betätigtes Ventil aktiviert werden. Das elektrisch zu betätigende Ventil ist vorzugsweise ein solches, welches nach dem Prinzip frei fliegender reibungsarmer Anker funktioniert und bei dem in vorteilhafter Weise die Magnetspule aufgrund ihrer Wärmeentwicklung bei Heizung des aktiven elektrischen Ventils eingesetzt werden kann. Des Weiteren ist das aktiv betätigte elektrische Ventil mit einer flexiblen, d.h. aus einem Gummi oder Elastomermaterial gefertigten Membran ausgestattet, welche die Eisdruckfestigkeit dieses Ventils darstellt.

Bei der erfindungsgemäß vorgeschlagenen Lösung kommt ein hydraulischer Federspeicher zum Einsatz. Der hydraulische Federspeicher umfasst ein Gehäuse und eine Arbeitsmembrane, die mit einer Feder beaufschlagt ist. Bei der Arbeitsmembrane, welche zwei Kammern des hydraulischen zwei voneinander unabhängige Kammern des hydraulischen Federspeichers voneinander trennt, handelt es sich insbesondere um eine aus metallischem Material oder auch aus Kunststoffmaterial gefertigte Membrane. Eine der durch die Arbeitsmembran getrennten Kammern des hydraulischen Federspeichers liegt im Förderzweig für das Medium, d.h. zwischen dem Förderaggregat und einem Schaltventil, während die andere Kammer des hydraulischen Federspeichers im Rücklauf zwischen einer Drossel und dem Vorratstank angeordnet ist.

In einer nicht erfindungsgemäßen Ausführungsvariante kann dem hydraulischen Federspeicher im Zulauf zum Dosiermodul bzw. Dosierventil ein passiv schaltendes Ventil, so zum Beispiel ein Rückschlagventil nachgeordnet sein. In diesem Falle wird das Reduktionsmittel durch das passive Ventil, so zum Beispiel ein Rückschlagventil V₁ mit einem niedrigen Öffnungsdruck in der Größenordnung von 0,5 bar zum Dosierventil gefördert. Nicht benötigte Menge an Reduktionsmittel wird über eine Drossel, die im Rücklauf angeordnet ist, wieder zum Vorratstank zurückgeführt. Ausgangsseitig der im Rücklauf angeschlossenen Kammer des hydraulischen Federspeichers, ist ein weiteres passives Ventil V₂, welches ebenfalls als Rückschlagventil ausgebildet ist, aufgenommen. Die über den Rücklauf zurückgeführte Flüssigkeit passiert dieses, wobei dieses weitere passive Ventil einen kleineren Öffnungsdruck in der Größenordnung von zum Beispiel 0,2 bar aufweist.

Wird die Verbrennungskraftmaschine abgestellt, so wird die elektrische Leitung zur Batterie des Fahrzeugs unterbrochen und das Förderaggregat stellt seine Förderung ein. Das Volumen zwischen dem Vorratstank, dem Förderaggregat und dem ausgangsseitig des hydraulischen Federspeichers angeordneten passiven Ventil V₁ wird entspannt. Das passive Ventil V₁ schließt, wonach die im hydraulischen Federspeicher vorgesehene Feder die Membrane aus der Position, die die Membran bei anliegendem Systemdruck einnimmt, in eine dazu entgegengesetzte Position bewegt. Dadurch entsteht im Rücklaufzweig ein Unterdruck auf der federseitigen Seite des hydraulischen Federspeichers. Das im Rücklauf vorgesehene, ausgangsseitig des hydraulischen Federspeichers liegende passive Ventil V₂ schließt, das ausgangsseitig des hydraulischen Federspeichers im Förderzweig liegende passive Ventil V₁ ist ohnehin bereits geschlossen.

Die beiden in dieser Ausführungsvariante dem hydraulischen Federspeicher zugeordneten passiven Ventile V₁ und V₂ sind beidseitig geflutet, das Dosierventil bzw. das Dosiermodul im Abgastrakt der Verbrennungskraftmaschine ist abgasrohrseitig luftbeaufschlagt. Der durch die Umlenkung der Membrane zwischen den Kammern des hydraulischen Federspeichers erfolgte Unterdruck bewirkt, dass durch das geschlossene Dosierventil Abgas in das Dosierventil bzw. Dosiermodul bis zu den geschlossenen passiven Ventilen V₁ bzw. V₂ eingesaugt wird. Dadurch wird das Dosierventil bzw. das Dosiermodul belüftet und ist somit gefrierfest.

In der der erfindungsgemäß vorgeschlagenen Lösung wird ebenfalls der hydraulische Federspeicher eingesetzt, jedoch ist diesem ausgangsseitig, d.h. in dem Förderzweig zum Dosiermodul bzw. Dosierventil liegend ein aktiv betätigtes elektrisches Ventil V₁ zugeordnet. Ausgangsseitig ist dem hydraulischen Federspeicher bzw. dessen im Rücklauf liegender Kammer analog zur ersten Ausführungsvariante ein passives Ventil V₂ nachgeschaltet, bei dem es sich beispielsweise um ein Rückschlagventil handeln kann. Das Reduktionsmittel, insbesondere eine Harnstoff-Wasser-Lösung wird durch das aktive elektrisch betätigte Ventil V₁ zum Dosierventil bzw. Dosiermodul gefördert. Auch hier wird die nicht benötigte Menge wie bei der nicht erfindungsgemäßen Ausführungsvariante über eine Drossel durch eine zweite Kammer des hydraulischen Federspeichers, der im Rücklaufzweig liegt, zum Vorratstank zurückgefördert. Analog zur nicht erfindungsgemäßen Ausführungsvariante passiert das flüssige Medium noch das als passives Ventil ausgebildete Ventil V₂, das insbesondere als Rückschlagventil ausgestaltet ist.

In der Betriebsstellung ist das aktiv betätigte elektrische Ventil V₁ bei Bestromen geöffnet. Sobald die Verbrennungskraftmaschine abgestellt wird, wird die elektrische Leitung zur Fahrzeugbatterie unterbrochen und das Förderaggregat stellt seine Förderung ein. Das Volumen, welches sich zwischen dem Vorratstank dem Förderaggregat und dem elektrisch betätigten Ventil V₁ befindet, wird entspannt. Das elektrisch betätigte Ventil schließt aufgrund einer Rückstellfeder bei abfallendem Systemdruck, wodurch die Druckbeaufschlagung der im Förderzweig liegenden Kammer des hydraulischen Federspeichers abnimmt, wodurch die im hydraulischen Federspeicher vorgesehene Feder die dortige Membran in ihre entgegengesetzte Position umlenkt. Dadurch wird analog zur nicht erfindungsgemäßen Ausführungsvariante ein Unterdruck auf der federseitigen Speicherseite des hydraulischen Federspeichers, d.h. in der Kammer erzeugt, die im Rücklaufzweig zum Vorratstank liegt. Dadurch bildet sich in dieser Kammer ein Unterdruck auf der federseitigen Speicherseite. Das passiv schaltende Ventil V₂ schließt, das aktiv betätigte Ventil V₁ ist bereits geschlossen.

Die beiden Ventile sind beidseitig fluidgeflutet, wobei das Dosierventil bzw. das Dosiermodul abgasrohrseitig luftbeaufschlagt ist. Der federseitig erzeugte Unterdruck bewirkt, dass durch das geschlossene Dosierventil bzw. Dosiermodul Abgas in dieses gesaugt wird, und bis zu dem elektrisch betätigten Ventil V₁ bzw. dem passiven Rückschlagventil V₂ eingesaugt wird, wodurch das Ventil bzw. das Dosiermodul belüftet ist und somit gefrierfest ist.

Es kann sein, dass, unter Umständen, je nach Einbaulage, sich das Dosierventil bzw. das Dosiermodul wieder mit Flüssigkeit befüllt. Durch eine gezielte Führung der Leitung des hydraulischen Federspeichers kann dies verhindert werden. Falls dies nicht ausreichend ist, kann im leitungsseitigen Ausgang des Dosierventils ein engmaschiger Filter eingebracht werden. Dieser verhindert, dass die Flüssigkeit in das bereits belüftete Dosierventil bzw. Dosiermodul zurückläuft. Erst beim Start der Verbrennungskraftmaschine, wenn das Dosierventil bzw. Dosiermodul wieder geöffnet wird, kann die Flüssigkeit, die sich in den Filtermaschen befindlichen Luftbläschen mit Druck aus dem Ventil spülen.

Bei der erfindungsgemäß vorgeschlagenen Lösung, , wird bevorzugt auf ein aktives Ventil zurückgegriffen, welches einen reibungsarm gelagerten, freifliegenden Anker aufweist. Des Weiteren ist in vorteilhafter Weise die Magnetspule in dem aktiven elektrischen ansteuerbaren Ventil dahingehend nutzbar, dass deren Abwärme zur Beheizung des Ventiles genutzt werden kann. Das aktiv betätigte, elektrische Ventil ist insbesondere als druckfest ausgelegt und weist im gefrierfähigen Medium beaufschlagbaren Arbeitsraum eine elastisch verformbare aus Elastomer oder aus Gummimaterial gefertigte Membrane auf.

### Kurze Beschreibung der Zeichnungen

Anhand der Zeichnung wird die Erfindung nachstehend eingehender beschrieben.

Es zeigt:
- Figur 1: ein Abgasnachbehandlungssystem mit Abgastrakt, Fördermodul, Dosiermodul sowie Leitungsführung,
- Figur 2: eine nicht erfindungsgemäße Ausführungsvariante in Betriebsstellung,
- Figur 3: die genannte Ausführungsvariante bei Stopp der Verbrennungskraftmaschine,
- Figur 4: eine erfindungsgemäße Ausführungsvariante in Betriebsstellung,
- Figur 5: die Stellung der genannten erfindungsgemäßen Ausführungsvariante nach Stopp der Verbrennungskraftmaschine und
- Figur 6: eine mögliche Ausführungsvariante des aktiv betätigbaren Ventils gemäß der Ausführungsvariante in Figur 4 und Figur 5.

### Ausführungsvariante

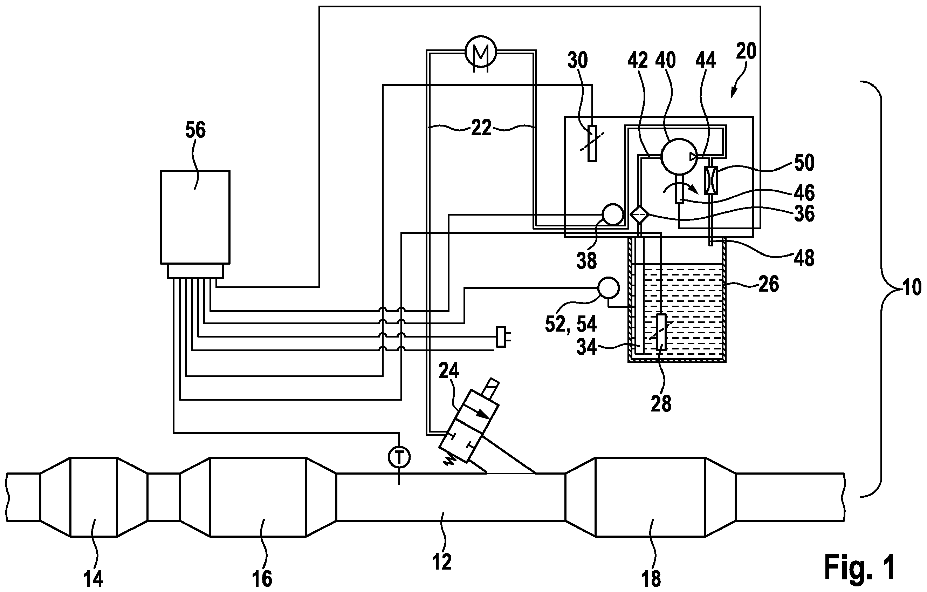

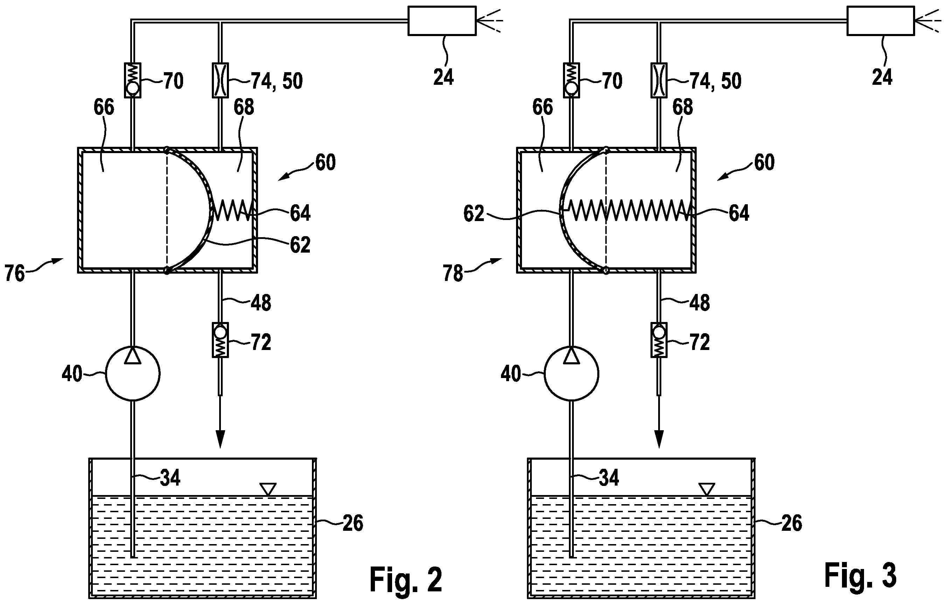

Der Darstellung gemäß Figur 1 ist ein Abgasnachbehandlungssystem zu entnehmen, welches zur Reduktion von NOₓ im Abgas von Verbrennungskraftmaschinen dient. Ein Abgasnachbehandlungssystem 10 gemäß der Darstellung in Figur 1 umfasst einen Abgastrakt 12, in dem ein Oxidationskatalysator 14, gegebenenfalls ein Dieselpartikelfilter 16 sowie ein NOₓ-Katalysator 18 aufgenommen sind. Im Abgastrakt 12 der Verbrennungskraftmaschine ist des Weiteren ein Dosiermodul 24 zugeordnet, über welche der Betriebs-Hilfsstoff, insbesondere ein Reduktionsmittel, bei dem es sich um eine Harnstoff-Wasser-Lösung handeln kann, in den Abgastrakt 12 eingespritzt wird, insbesondere stromauf des NOₓ-Katalysators 18. Des Weiteren umfasst das Abgasnachbehandlungssystem 10 gemäß der Darstellung in Figur 1 ein Fördermodul 20, welches sich oberhalb eines Vorratstanks 26, in dem das Reduktionsmittel bevorratet wird, befindet. Zwischen dem Dosiermodul 24 und dem Fördermodul 20 erstreckt sich ein Leitungssystem 22, welches mit mindestens einem Heizelement versehen ist. Im Vorratstank 26 befindet sich ebenfalls eine Heizung, die in der Darstellung gemäß Figur 1 durch Position 28 bezeichnet ist. Das Fördermodul 20 weist ebenfalls eine Heizung 30 auf. Im Fördermodul 20 befinden sich Ventile, über welche die Förderung bzw. Rückförderung von Reduktionsmittel in den Vorratstank 26 gesteuert wird, und die in den Figuren 2 bis 5 näher dargestellt sind.

Des Weiteren befindet sich im Fördermodul 20 des Abgasnachbehandlungssystems 10 ein Filter 36 und ein Drucksensor 38. Der Filter 36 befindet sich am oberen Ende einer Sauglanze 34, die in den Vorratstank 26 hineinragt. Dieser ist mit einer Tankheizung 28 versehen. Ein Förderaggregat 40 wird durch einen Antrieb 46 angetrieben, der in beide Drehrichtungen angetrieben werden kann. Das Förderaggregat 40 weist eine Saugseite 42 sowie eine Druckseite 44 auf. Stromab des Förderaggregates 40, auf der Druckseite 44 zweigt ein Rücklauf 48 an der Förderleitung des Reduktionsmittels ab, indem eine Rücklaufdrossel 50 vorgesehen ist. Der Rücklauf 48 mit Rücklaufdrossel 50 mündet in den Vorratstank 26, in dem das Reduktionsmittel bevorratet wird.

Des Weiteren sind dem Vorratstank 26 des Abgasnachbehandlungssystems 10 gemäß der Darstellung in Figur 1 ein Füllstandssensor 52 sowie ein Temperatursensor 54 zugeordnet. Darüber hinaus umfasst das Abgasnachbehandlungssystem 10 ein Steuergerät 56, über welches die einzelnen Komponenten angesteuert bzw. Druck- und Temperatursignale von den einzelnen Komponenten des Abgasnachbehandlungssystems 10 erhalten und weiter verarbeitet werden.

Der Darstellung gemäß Figur 2 ist eine nicht erfindungsgemäße Ausführungsvariante in Betriebsstellung zu entnehmen.

Das Förderaggregat 40 fördert durch die Sauglanze 34 kontinuierlich Reduktionsmittel aus dem Vorratstank 26. Die Druckseite des Förderaggregates 44 mündet in eine erste Kammer 66 eines hydraulischen Federspeichers 60. Die erste Kammer 66 des hydraulischen Federspeichers 60 liegt im Förderzweig zum Dosiermodul 24. Der ersten Kammer 66 des hydraulischen Federspeichers 60 ist ein erstes passives Ventil V₁, vergleiche Bezugszeichen 70, nachgeschaltet.

Des Weiteren umfasst der hydraulische Federspeicher 60 eine zweite Kammer 68, die im Rücklauf 48 liegt, insbesondere zwischen einer Rücklaufdrossel 50, 74. Abströmseitig ist der zweiten Kammer 68 des hydraulischen Federspeichers 60 ein weiteres zweites passives Ventil V₂, insbesondere ausgebildet als Rückschlagventil 72 nachgeschaltet, welches im Rücklauf 48 liegt und über das bei Überschreiten des Öffnungsdruckes Reduktionsmittel in den Vorratstank 26 zurückgeleitet werden kann.

Im hydraulischen Federspeicher 60 befindet sich eine auslenkbare Arbeitsmembran 62, deren Ruhestellung als gestrichelte vertikale Linie gezeichnet ist. In der in Figur 2 dargestellten Betriebsstellung ist die erste Kammer 66 bedingt durch den Betrieb der Förderpumpe 40 mit Systemdruck beaufschlagt, so dass die Membran 62 eine in der zweiten Kammer 68 des hydraulischen Federspeichers 60 vorgesehene Feder 64 komprimiert, die demzufolge potentielle Energie speichert. Das Reduktionsmittel wird gemäß der Darstellung in Figur 2 durch das erste passive Ventil 70, ausgebildet als Rückschlagventil, welches einen niedrigen Öffnungsdruck in der Größenordnung von 0,5 bar aufweist, zum Dosiermodul 24 gefördert. Nicht benötigte Menge wird über die Drossel 50, 54 wieder zum Vorratstank 26 zurückgefördert. Dabei muss das Reduktionsmittel noch das der zweiten Kammer 68 austrittsseitig nachgeschaltete zweite passive Ventil V₂ passieren, welches einen geringeren Öffnungsdruck als das erste passive Ventil 70 aufweist, wobei dieser kleinere Öffnungsdruck in der Größenordnung von beispielsweise etwa 0,2 bar liegt.

Das System nimmt bei laufender Verbrennungskraftmaschine und demzufolge bei stetigem Antrieb des Förderaggregates 40 die in Figur 2 dargestellte Betriebsstellung ein.

Figur 3 zeigt die nicht erfindungsgemäße Ausführungsvariante bei abgestellter Verbrennungskraftmaschine und unterbrochener Stromversorgung.

Wird die Verbrennungskraftmaschine abgestellt, so wird die elektrische Leitung zur Batterie unterbrochen und das Förderaggregat 40 stellt seine Förderung ein. Das Volumen zwischen dem Vorratstank 26, dem Förderaggregat 40 und dem ersten passiven Ventil 70 wird entspannt, d.h. es stellt sich ein Druckverlust ein, da die Pumpe ihren Betrieb eingestellt hat. Das passive Ventil V₁, vergleiche Position 70, schließt und die im hydraulischen Federspeicher 60 gemäß Figur 2 vorgespannte Feder 74 entspannt sich. Dadurch wird die Membran 62 von der in Figur 2 dargestellten ausgelenkten Position, in der sie in die zweite Kammer 68 hineinragt, in die in Figur 3 dargestellte ausgelenkte Positon überführt, in welcher die Membran 62 in die erste Kammer 66 des hydraulischen Federspeichers 60 ragt. Dadurch bildet sich in der zweiten Kammer 68 des hydraulischen Federspeichers ein Unterdruck. Aufgrund des Unterdruckes schließt das zweite passive Ventil 72 im Rücklauf 48, das erste passive Ventil V₁, vergleiche Position 70, ist ohnehin bereits geschlossen.

Die beiden passiven Ventile 70 bzw. 72, bevorzugt ausgebildet als Rückschlagventile, sind beidseitig fluidgeflutet, während das Dosiermodul 24 abgasrohrseitig luftbeaufschlagt ist. Die Leckage eines Ventils hinsichtlich Luft, ist im Allgemeinen bedeutend größer als die Leckage eben dieses Ventiles gegen Flüssigkeit. Der in der zweiten Kammer 68 aufgrund der Entspannung der Membranfeder 64 entstandene Unterdruck bewirkt, dass durch das geschlossene Dosierventil 24 Abgas in dieses bis zu dem geschlossenen passiven Ventil V₁, vergleiche Bezugszeichen 70 und zu dem geschlossenen passiven Ventil V₂, vergleiche Position 72 in das Leitungssystem gesaugt wird. Dadurch ist das Dosiermodul 24 samt Leitungssystem belüftet und somit gefrierfest.

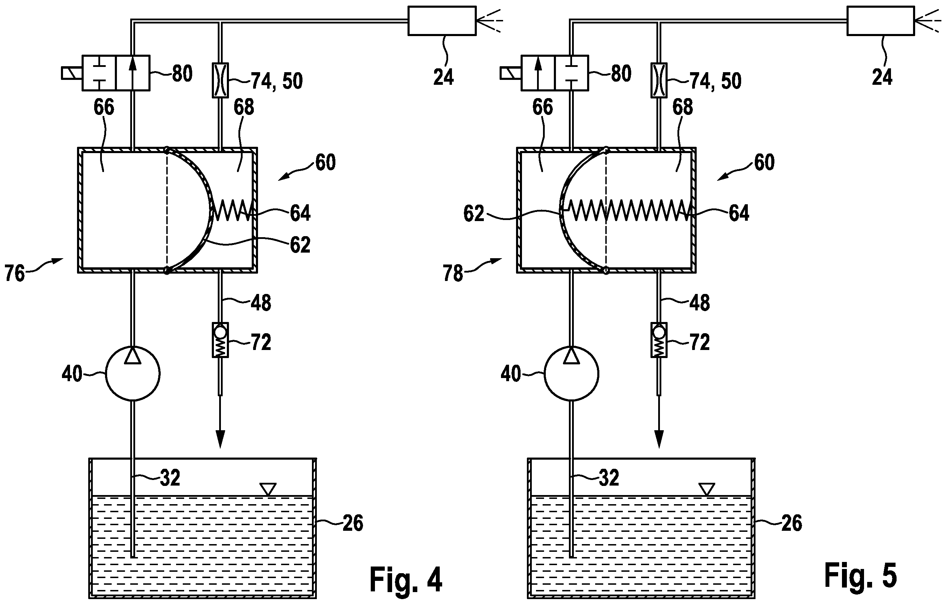

Figur 4 zeigt eine erfindungsgemäße Ausführungsvariante in Betriebsstellung.

Im Unterschied zur Darstellung gemäß Figur 2 ist das in Figur 2 eingesetzte passive Ventil V₁, vergleiche Bezugszeichen 70 durch ein aktives elektrisch betätigtes Ventil V₂ ersetzt.

Im übrigen entspricht die Darstellung gemäß Figur 4 - bis auf den Unterschied hinsichtlich des elektrisch betätigten aktiven Ventiles V₁, vergleiche Position 80 - den Komponenten, die in Zusammenhang mit der Ausführungsvariante gemäß Figur 2 in dessen Betriebsstellung bereits beschrieben worden sind.

Figur 4 zeigt, dass bei Betrieb der Verbrennungskraftmaschine in der ersten Kammer 66 des hydraulischen Federspeichers 60 die Betriebsstellung 76 des Systemdrucks aufrechterhalten wird, so dass die im hydraulischen Federspeicher 60 die erste Kammer 66 von der zweiten Kammer 68 trennende Membran 62 in die zweite Kammer 68 ausgelenkt ist und demzufolge die Membranfeder 64 komprimiert ist. Die Membran 62, welche die erste Kammer 66 von der zweiten Kammer 68 trennt, kann aus metallischem Material und auch aus Kunststoffmaterial gefertigt sein. Der ersten Kammer 66 ist ausgangsseitig das aktiv betätigbare Ventil V₁, vergleiche hier Position 80, nachgeschaltet. Im Betriebszustand erfolgt eine kontinuierliche Förderung von Reduktionsmittel aus dem Vorratstank 26 über die Sauglanze 34 und das Förderaggregat 40 in die erste Kammer 66 des hydraulischen Federspeichers 60. Das Reduktionsmittel wird mit Systemdruck über das in seiner Öffnungsposition stehende aktive Ventil V₁, vergleiche Position 80, zum Dosiermodul 24 geleitet und dort in den in Figur 1 dargestellten Abgastrakt, vergleiche Position 12, eingespritzt.

Analog zur Darstellung gemäß Figur 2 ist die zweite Kammer 68 des hydraulischen Federspeichers 60 im Rücklaufzweig angeordnet, d.h. liegt im Rücklauf 48 zwischen dem in der zweiten Kammer 68 austrittseitig angeordneten zweiten passiven Ventil 72 und dem der zweiten Kammer 68 des hydraulischen Federspeichers 60 vorgeschalteten Drossel 74, 50.

Figur 5 zeigt die Stellung der Komponenten des Systems nach Abschalten der Verbrennungskraftmaschine. Sobald diese abgeschaltet wird, wird die elektrische Leitung zwischen der Fahrzeugbatterie und dem Förderaggregat 40 unterbrochen, so dass der Systemdruck in der ersten Kammer 66 des hydraulischen Federspeichers 68 abfällt. Das Volumen zwischen dem Vorratstank 26, dem Förderaggregat 40 und dem aktiv betätigbaren Ventil V₁, vergleiche Position 80, wird entspannt. Das aktiv betätigbare Ventil V₁, vergleiche Position 80, schließt aufgrund der Wirkung einer in diesem aufgenommenen Rückstellfeder und aufgrund des in der ersten Kammer 66 abfallenden Systemdrucks entspannt sich die zuvor in der Betriebsstellung gemäß Figur 4 aufgrund des in der ersten Kammer 66 herrschenden Systemdruckes komprimierte Membranfeder 64 und drückt die Membran - wie in Figur 5 dargestellt - in ihre gegenüberliegende Position, d.h. in die erste Kammer 66 des hydraulischen Federspeichers 60 hinein. Dadurch bildet sich ein Unterdruck in der ersten Kammer 68, der dazu führt, dass das im Rücklauf 48 ausgangsseitig der zweiten Kammer 68 enthaltene passive Ventil V₂, vergleiche Position 72, schließt. Da das erste aktiv betätigbare Ventil 80 aufgrund der Wirkung einer Rückstellfeder ohnehin bereits geschlossen ist, strömt aufgrund des in der zweiten Kammer 68 herrschenden Unterdrucks Abgas in das Leitungssystem ausgehend vom Dosiermodul 24 bis zum geschlossenen, aktiv betätigbaren Ventil V₁, vergleiche Position 80 und bis zum ausgangsseitig der zweiten Kammer 68 des hydraulischen Federspeichers 60 vorgesehenen passiven Ventil V₂, vergleiche Position 72. Somit ist der in diesem Leitungsabschnitt enthaltene Reduktionsmittelvorrat in den Vorratstank 26 rückgesaugt, so dass diese Komponenten des Abgasnachbehandlungssystems 10 gefrierfest sind. Das Rücksaugen des Reduktionsmittelvorrates im oben stehend beschriebenen Leitungssystem aufgrund der Wirkung des Unterdrucks in der zweiten Kammer 68 ist deswegen möglich, weil Leckage des Dosiermoduls 24 hinsichtlich von Luft bedeutend größer ist als die Leckage dieses Ventils gegenüber Flüssigkeit.

In den beiden in Zusammenhang mit den Figuren 2 bis 5 beschriebenen Ausführungsvarianten könnte sich das Dosiermodul 24 bzw. das Dosiermodul je nach Einbaulage wieder mit Flüssigkeit befüllen. Durch eine gezielte Führung des Leitungsverlaufes und eine gezielte Anordnung des hydraulischen Federspeichers 60, kann dies verhindert werden. So können zum Beispiel der hydraulische Federspeicher 60 sowie die Leitungen zum Dosiermodul 24 und zum Vorratstank 26 an irgendeiner Stelle höher liegen als der Vorratstank 26 und das Dosiermodul 24 selbst.

Ist dies nicht möglich, so kann im leitungsseitigen Ausgang des Dosiermodules 24 bzw. des Dosierventiles 24 ein engmaschiges Filterelement angebracht werden. Durch dieses lässt sich verhindern, dass die Flüssigkeit in das bereits belüftete Dosierventil bzw. Dosiermodul 24 zurückläuft und sich in diesem eine gefrierfähige Reduktionsmittelmenge ansammelt, die beim Gefrieren zur Beschädigung führen könnte.

Erst beim Starten der Verbrennungskraftmaschine, d.h. beim Öffnen des Dosierventiles 24 zum Einbringen von Reduktionsmittel in den Abgastrakt 12 der Verbrennungskraftmaschine, kann das Reduktionsmittel in flüssiger Form die sich in den Filtermaschen dieses engmaschig auszulegenden Filters befindlichen Luftbläschen unter Druck aus dem Dosiermodul 24 bzw. dem Dosiermodul 24 austragen.

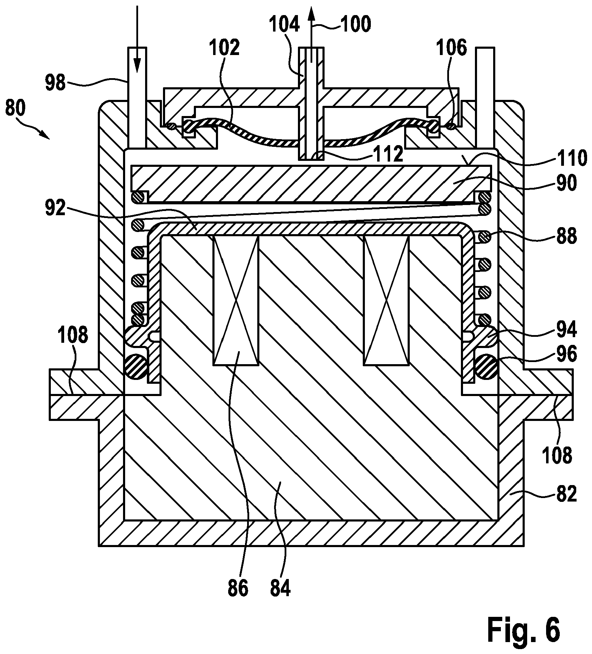

Der Darstellung gemäß Figur 6 ist eine mögliche Ausführungsvariante des in den Figuren 4 und 5 aktiv betätigbaren Ventil V₁ zu entnehmen.

Der Darstellung gemäß Figur 6 ist zu entnehmen, dass das aktiv betätigbare Ventil V₁, vergleiche Position 80, ein zum Beispiel zweiteiliges Gehäuse 82 aufweist. Die beiden Gehäusehälften des zweiteilig ausgebildeten Gehäuses 82 sind entlang einer Trennfuge 108 miteinander gefügt, beispielsweise - wie in Figur 6 angedeutet - miteinander verschraubt. Im Inneren des Gehäuses 82 des aktiv betätigbaren Ventiles 80 befindet sich ein Magnetkern 84. In den Magnetkern 84 ist eine Magnetspule 86 eingelassen. Der Magnetkern 84 und die darin aufgenommene Magnetspule 86 sind von einer Platte bzw. einer Glocke 92, die bevorzugt aus austenitischem Material gefertigt wird, umschlossen. Die Platte bzw. Glocke 92 aus austenitischem Material umfasst eine beispielsweise bundförmige Erhebung 94, auf der sich eine Ankerfeder 88 abstützt. Die Ankerfeder 88 führt einen plattenförmig ausgebildeten Anker 90 extrem reibungsarm in radiale Richtung und in axiale Richtung in Bezug auf die Geometrie des Gehäuses 82 des aktiv betätigbaren Ventiles V₁, vergleiche Bezugszeichen 80. Unterhalb des Bundes 94 in der Platte bzw. dem Träger 92 aus austenitischem Material, befindet sich eine Dichtung 96, die zum Beispiel als umlaufender O-Ring ausgebildet sein kann. Durch die umlaufende Dichtung 96 wird ein Arbeitsraum im Gehäuse 82 abgedichtet, der über einen Zulauf 98 mit Reduktionsmittel beaufschlagt ist und in den sich ein Ablauf 100 erstreckt. Der Ablauf 100 kann zum Beispiel eine Röhre 104 umfassen, die innerhalb des Gehäuses 82 des aktiv betätigbaren Ventiles 80 unterhalb einer verformbaren, insbesondere eisdruckfest ausgeführten Membran 102 mündet. Die Öffnung 112 wird im stromlosen Zustand der Magnetspule 86 des aktiv betätigbaren Ventiles V₁, vergleiche Position 80, verschlossen, während die Öffnung 112 durch die Planseite 110 des reibungsarm gelagerten Ankers 90 insbesondere dann freigegeben ist, wenn die Magnetspule 86 aktiv bestromt ist. Durch die umlaufend ausgebildete Dichtung 96 ist der mit gefrierfähigem Reduktionsmittel beaufschlagbare Arbeitsraum, in dem sich der frei reibungsarm gelagerte Anker 90 bewegt, gegen den Magnetkern 84 abgedichtet. Die Eisdruckfestigkeit des aktiv betätigbaren Ventiles V₁, vergleiche Position 80, ist dadurch gewährleistet, dass bei Gefrieren des in flüssiger Form in den Arbeitsraum des aktiv betätigbaren Ventiles V₁, vergleiche Bezugszeichen 80, eintretenden Reduktionsmittels die eisdruckfest ausgebildete Membran 102 die Volumenzunahme, die bei der Erstarrung des Reduktionsmittels unweigerlich auftritt, kompensiert, so dass keine Beschädigungen aufgrund eines zu hohen Eisdruckes am aktiv betätigbaren Ventil V₁ auftreten können. Ein Deckelelement, durch welches sich die Röhre 104 des Ablaufs 100 erstreckt, ist mittels einer stoffschlüssigen Verbindung 106, die zum Beispiel als Verschweißung ausgebildet sein kann, mit dem Oberteil des mehrteilig ausgebildeten Gehäuses 82 des aktiv betätigbaren Ventiles V₁, vergleiche Position 80, verbunden.

In vorteilhafter Weise kann bei der Ausführungsvariante gemäß Figur 6, die beim Betrieb der Magnetspule 86 auftretende Erwärmung zur Beheizung des aktiv betätigbaren Ventiles V₁, vergleiche Position 80 in Figur 6 ausgenutzt werden.

## Patentansprüche

1. Vorrichtung zur Belüftung eines Abgasnachbehandlungssystems (10), mit dem ein gefrierfähiger Betriebs-/Hilfsstoff, insbesondere ein Reduktionsmittel, in einen Abgastrakt (12) einer Verbrennungskraftmaschine eindosiert wird, **dadurch gekennzeichnet, dass** ein hydraulischer Federspeicher (60, 66, 68) im Betrieb mit Systemdruck Energie speichert und diese bei Abstellen der Verbrennungskraftmaschine stromlos freisetzt, wobei ein Unterdruck zur Absaugung des Betriebs-/Hilfsstoffes aus dem Abgasnachbehandlungssystem (10) erzeugt wird, wobei der hydraulische Federspeicher (60, 66, 68) eine erste Kammer (66) sowie eine zweite Kammer (68) aufweist, wobei die erste Kammer (66) durch ein Förderaggregat (40) beaufschlagt ist und dieser ein Ventil V₁ (70, 80) nachgeschaltet ist derart, dass durch das Ventil das Reduktionsmittel zum Abgastrakt gefördert wird, wobei die zweite Kammer (68) über einen Rücklauf (48) mit einem Vorratstank (26) verbunden ist, und wobei das Ventil V₁ (70, 80) welches stromab der ersten Kammer (66) angeordnet ist, als aktives betätigbares Ventil (80) mit reibungsarm gelagertem Anker (90) ausgeführt ist, und wobei der reibungsarm gelagerte Anker (90) stromlos mit seiner Planseite (110) eine Öffnung (112) eines Ablaufes (100) verschließt.

2. Vorrichtung gemäß Anspruch 1, **dadurch gekennzeichnet, dass** die erste Kammer (66) und die zweite Kammer (68) durch eine verformbare, aus Kunststoff oder metallischem Material ausgebildete Membran (62) voneinander getrennt sind, die durch eine einen Energiespeicher darstellende Membranfeder (64) beaufschlagt ist.

3. Vorrichtung gemäß einem der vorhergehenden Ansprüche, **dadurch gekennzeichnet, dass** ein Rücklauf (48) eine Drossel (50, 74) und ein weiteres passives Ventil V₂ (72), insbesondere ein Rückschlagventil, aufgenommen sind.

4. Vorrichtung gemäß einem der vorhergehenden Ansprüche, **dadurch gekennzeichnet, dass** das aktiv betätigbare Ventil V₁ (80) im durch den Betriebs-/Hilfsstoff beaufschlagten Gehäuse (82) eine eisdruckfeste Membran (102) umfasst.

5. Vorrichtung gemäß einem der vorhergehenden Ansprüche, **dadurch gekennzeichnet, dass** der Anker (90) im Wesentlichen radial und reibungsarm über eine Feder (88) im Gehäuse (82) abgestützt ist.

6. Vorrichtung gemäß einem der vorhergehenden Ansprüche, **dadurch gekennzeichnet, dass** Magnetspule (86) und Magnetkern (84) des aktiv betätigbaren Ventiles (80) durch eine Platte oder eine Glocke (92) aus austenitischem Material gekapselt sind.

## Claims

1. Device for aerating an exhaust-gas aftertreatment system (10) in which an operating/auxiliary medium which is capable of freezing, in particular a reducing agent, is dosed into an exhaust-gas tract (12) of an internal combustion engine, **characterized in that** a hydraulic spring accumulator (60, 66, 68) stores energy during operation with system pressure and releases said energy, when the internal combustion engine is shut down, in currentless fashion, wherein a negative pressure for suctioning the operating/auxiliary medium out of the exhaust-gas aftertreatment system (10) is generated, wherein the hydraulic spring accumulator (60, 66, 68) has a first chamber (66) and a second chamber (68), wherein the first chamber (66) is charged by a conveying apparatus (40) and a valve V₁ (70, 80) is positioned downstream of said first chamber, such that the reducing agent is conveyed to the exhaust-gas tract through the valve, wherein the second chamber (68) is connected via a return line (48) to a reservoir tank (26), and wherein the valve V₁ (70, 80), which is arranged downstream of the first chamber (66) is designed as an active actuatable valve (80) with an armature (90) mounted with low friction, and wherein the armature (90) mounted with low friction closes, by way of its flat side (110), an opening (112) of an outlet (100) when in a currentless state.

2. Device according to Claim 1, **characterized in that** the first chamber (66) and the second chamber (68) are separated from one another by a deformable diaphragm (62) which is formed from plastic or metallic material, which diaphragm is acted on by a diaphragm spring (64) which constitutes an energy store.

3. Device according to one of the preceding claims, **characterized in that** a return line (48) a throttle (50, 74) and a further passive valve V₂ (72), in particular a check valve, are accommodated.

4. Device according to one of the preceding claims, **characterized in that** the actively actuatable valve V₁ (80) comprises, in the housing (82) charged with the operating/auxiliary medium, a diaphragm (102) which is resistant to ice pressure.

5. Device according to one of the preceding claims, **characterized in that** the armature (90) is supported substantially radially and with low friction by means of a spring (88) in the housing (82).

6. Device according to one of the preceding claims, **characterized in that** magnet coil (86) and magnet core (84) of the actively actuatable valve (80) are encapsulated by a plate or a bell housing (92) composed of austenitic material.

## Revendications

1. Dispositif de ventilation d'un système de post-traitement de gaz d'échappement (10), avec lequel un carburant/adjuvant pouvant geler, notamment un agent réducteur, est introduit de manière dosée dans un conduit de gaz d'échappement (12) d'un moteur à combustion interne, **caractérisé en ce qu'**un accumulateur à ressort hydraulique (60, 66, 68) accumule de l'énergie pendant le fonctionnement avec la pression du système et fournit celle-ci sans courant à l'arrêt du moteur à combustion interne, une dépression étant générée pour l'aspiration du carburant/adjuvant hors du système de post-traitement de gaz d'échappement (10), l'accumulateur à ressort hydraulique (60, 66, 68) présentant une première chambre (66) ainsi qu'une deuxième chambre (68), la première chambre (66) étant sollicitée par un ensemble de refoulement (40) et une soupape V₁ (70, 80) étant montée en aval de ladite première chambre de telle sorte que l'agent réducteur soit refoulé vers le conduit de gaz d'échappement à travers la soupape, la deuxième chambre (68) étant connectée par le biais d'un retour (48) à un réservoir (26) et la soupape V₁ (70, 80) qui est disposée en aval de la première chambre (66) étant réalisée sous forme de soupape (80) commandable active avec un induit (90) supporté avec peu de friction et l'induit (90) supporté avec peu de friction fermant sans courant, avec son côté plan (110), une ouverture (112) d'un écoulement (100).

2. Dispositif selon la revendication 1, **caractérisé en ce que** la première chambre (66) et la deuxième chambre (68) sont séparées l'une de l'autre par une membrane déformable (62) réalisée en plastique ou en matériau métallique, qui est sollicitée par un ressort à membrane (64) constituant un accumulateur d'énergie.

3. Dispositif selon l'une quelconque des revendications précédentes, **caractérisé en ce qu'**un retour (48) un étranglement (50, 74) et une soupape passive supplémentaire V₂ (72), en particulier un clapet antiretour, sont reçus.

4. Dispositif selon l'une quelconque des revendications précédentes, **caractérisé en ce que** la soupape pouvant être commandée de manière active V₁ (80) comprend, dans le boîtier (82) sollicité par le carburant/adjuvant, une membrane (102) résistant à la pression de la glace.

5. Dispositif selon l'une quelconque des revendications précédentes, **caractérisé en ce que** l'induit (90) est supporté essentiellement radialement et avec peu de friction par le biais d'un ressort (88) dans le boîtier (82).

6. Dispositif selon l'une quelconque des revendications précédentes, **caractérisé en ce que** la bobine magnétique (86) et le noyau magnétique (84) de la soupape commandable activement (80) sont encapsulés par une plaque ou une cloche (92) en matériau austénitique.
